(19) Europäisches Patentamt
European Patent Office
Office européen des brevets

(11) **EP 4 737 051 A1**

(12) **EUROPEAN PATENT APPLICATION**

(43) Date of publication:
**06.05.2026 Bulletin 2026/19**

(21) Application number: **24210138.4**

(22) Date of filing: **31.10.2024**

(51) International Patent Classification (IPC):
**B23K 26/38** (2014.01)    **B23K 26/70** (2014.01)
**B23K 101/18** (2006.01)    **B23Q 15/00** (2006.01)
**G06Q 10/04** (2023.01)

(52) Cooperative Patent Classification (CPC):
**B23K 26/38; B23K 26/70; G06Q 10/043;
G06Q 50/04;** B23K 2101/185

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bystronic Laser AG
3362 Niederönz (CH)**

(72) Inventors:
• **Mendoza, Roberto
3362 Niederönz (CH)**
• **Zingg, Markus
3362 Niederönz (CH)**

(74) Representative: **Perani & Partners S.p.A.
Corso Europa, 15
20122 Milano (IT)**

(54) **METHOD FOR LASER CUTTING AT LEAST TWO PARTS OUT OF A SHEET METAL AND CREATING A RESIDUAL SHEET PORTION FROM WHICH FURTHER PARTS CAN BE CUT**

(57)    Method for laser cutting a sheet metal (1) extending in a cutting plane (1a) and delimited by a peripheral edge (1b), comprising the step of:
a) cutting at least two parts (100) out of the sheet metal (1) by moving a laser beam in the cutting plane (1a) along a closed cutting path (P) which begins and ends at a lead in/out point (100b) and follows a contour (100a) of the respective part (100);
b) cutting the sheet metal (1) by moving the laser beam in the cutting plane (1a) along a cutting line (L) to divide the sheet metal (1) into:
- a scrap sheet portion (3) which contains the lead in/out points (100b), and
- a residual sheet portion (2), separate from the scrap portion (3), out of which further parts can be cut,

wherein the cutting line (L) is positioned in the cutting plane (1a) so that it has:
- at least a first segment (L1) extending between the contours (100a) of two of the at least two parts (100), and
- two second segments (L2) associated to a respective part (100) and extending between the peripheral edge (1b) of the sheet metal (1) and the contour (100a) of the respective part (100).

Fig. 2

EP 4 737 051 A1

## Description

*Technical field*

The present invention relates to a method for laser cutting at least two parts out of a sheet metal and creating a residual sheet portion from which further parts can be cut.

The present invention also relates to a computer program which, when executed by a computer unit of a laser cutting machine, causes a laser cutting machine to carry out the above-mentioned laser cutting method

*State of the art*

Laser cutting is a well-known technology that uses a laser beam to vaporize materials, resulting in a cut edge.

This laser cutting technology has been combined with computer numerical control in CNC machines to automate the cutting operations of parts from metal sheets.

In order to reduce production waste and thus the environmental impact, laser cutting methods configured to separate the processed sheet metal into a scrap sheet portion and a residual sheet portion have been developed.

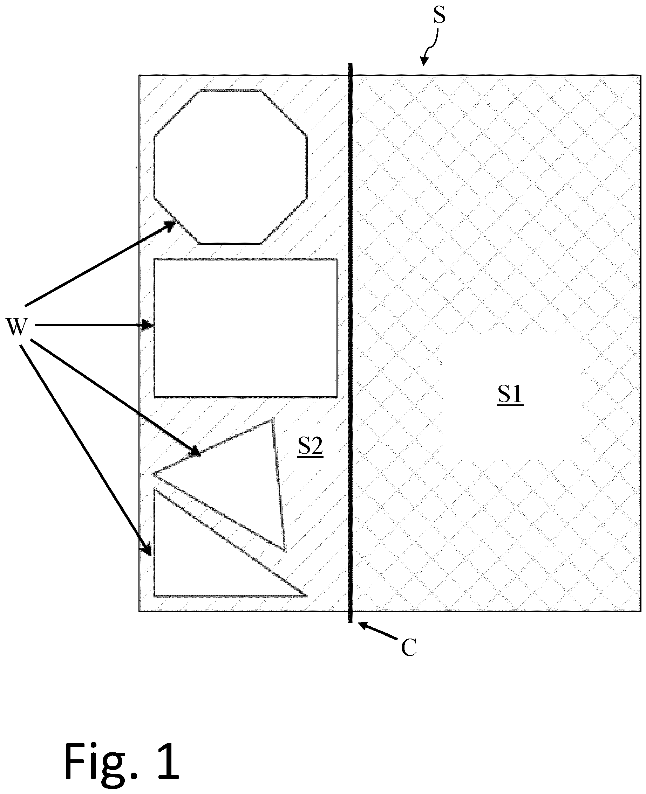

In detail, with reference to Figure 1, these known laser cutting methods create the residual sheet portion by making an additional straight residual cut C, apart from at least one previously cut part W, which divides the processed sheet S into the residual sheet and scrap portions S 1, S2.

The residual cut C is placed as close as possible to the cut workpiece(s)/part(s), maintaining a minimum safety distance so as not to damage it (them).

Although these known laser cutting methods allow a portion of the cut sheet (i.e. residual sheet portion) to be recovered for re-use, they are far from optimal as they create extra skeleton for scrap metal between the part(s) and the residual cut.

Moreover, these known laser cutting methods require a lot of time and energy to make the residual cut that separates the residual sheet portion from the scrap sheet portion.

*Scope of the invention*

In this context, the technical task underlying the present invention is to propose a method for laser cutting a sheet which overcomes the aforementioned drawbacks of the known art.

In particular, it is an object of the present invention to provide a method for laser cutting a sheet metal which allows to increase the recovered residual sheet portion and reduces the time and energy required.

In other words, it is an object of the present invention to provide a laser cutting method which, compared to the known ones, uses less time, less energy and generates less scrap out of the same cutting plan for the same sheet.

*Summary of the invention*

The method for laser cutting a sheet metal of the present invention, after cutting at least two parts out of the sheet metal by moving a laser beam along a respective closed cutting path which begins and ends at a lead in/out point and follows the part contour, comprises the step of dividing the sheet metal into a scrap sheet portion which contains the lead in/out points and a residual sheet portion form which further parts can be cut.

In detail, the sheet metal is divided into scrap and residual sheet portions by moving the laser beam along a cutting line positioned to have at least one first segment extending between the contours of two parts and two second segments extending between the peripheral edge of the sheet metal and the contour of a respective part.

Such positioning of the cutting line saves cutting work (i.e. cutting time and cutting energy) by taking advantage of the cuts made to cut the parts from the sheet. Specifically, such positioning of the cutting line makes it possible to separate the sheet metal into scrap and residual sheet portions by using (part of) the cuts previously made along the cutting paths to connect the first and second segments.

Moreover, such positioning of the cutting line increases the area of the residual sheet by eliminating the aforementioned extra skeleton for scrap metal that remains between the parts and the residual cut when the known methods are used.

It is therefore evident that the method according to the present invention uses less time, less energy and generates less scrap out of the same cutting plan for the same sheet metal as compared to the known methods.

According to one embodiment, the first segment connects the cutting paths associated with two parts and each second segment connects the peripheral edge of the sheet metal to the cutting path associated with the respective part. Such first and second segments make it easier to separate the scrap sheet portion from the residual sheet portion.

According to one embodiment, before cutting the sheet metal along the cutting line, the method comprises a cutting line positioning step wherein the position of the cutting line is defined by minimizing its total length (i.e. the sum of the lengths of the first and second segments). Advantageously, the cutting line positioning step permits the determination of the optimum cutting line position which minimizes the cutting time and energy.

According to one embodiment, the cutting line positioning step comprises the sub-steps of: identifying a bundle of segments for each first and second segments to be defined; computing the length of each segment of each bundle of segments; and selecting the first and the second segments from the respective bundle of segments such that the total length of the cutting line is the smallest. Advantageously, the above sub-steps allow the total length of the cutting line to be easily minimized by simple sum and comparison operations.

According to one embodiment, the first segment extends linearly along a first direction while the second segments extend linearly along a respective second direction parallel to the first direction. The linear and parallel conformation of the first and second segments allows their length to be minimized, thereby reducing the cutting time and energy required to divide the sheet metal into the scrap and residual sheet portions.

According to one embodiment, the first and second directions are coincident. This mutual position of the first and second cuts avoids time-consuming shifting operations between the cutting of the first and the second segments.

According to one embodiment, before cutting the sheet metal along the cutting line, the method comprises a set-up step in which the position of a piercing point in the cutting plane is computed for each first and second segments. The piercing points are the points from which the laser beam is moved to cut the respective first or second segment of the cutting line and they are arranged on the scrap sheet portion outside of the respective first or second segments. Advantageously, this arrangement of the piercing points gives a good finishing to the first or second segments which define the edges of the residual sheet portion.

According to one embodiment, the piercing point associated with the first segment is arranged in a first middle region between the respective two parts, while the piercing points associated with the second segments are arranged in a respective second middle region between the associated part and the peripheral edge of the sheet. Advantageously, the arrangement of the first and second piercing points in the first and second middle region avoids accidental and unwanted damage to the parts and to the residual sheet portion.

According to one embodiment, the first segment and the second segments of the cutting line have at least one end portion which is spaced from the contour of the respective part by a safety distance. Advantageously, this safety distance prevents accidental and unwanted damage to the parts during the cutting of the first and second segments.

According to one aspect, at least one part is partitioned (divided) into a first and a second part portions which are defined by the contour of the part and a partition segment. The latter separates the first and second part portions and is part of the cutting path of the partitioned part. Advantageously, this speeds up the cutting process by cutting a group of pieces (i.e. at least the first and second part portions) in a common cut, which means that the group of pieces is managed as if they were a single joined part.

The present invention further relates to a computer program product comprising instructions which, when the program is executed by a computer unit of a laser cutting machine, cause the laser cutting machine to carry out the above-mentioned method for laser cutting.

## BRIEF DESCRIPTION OF THE DRAWINGS

Further characteristics and advantages of the present invention will appear more clearly from the indicative, and therefore non-limiting, description of a preferred but not exclusive embodiment of the method for laser cutting a sheet metal as illustrated in the enclosed drawings in which:

- Figure 1 shows a schematic top view of a sheet metal that has been cut performing a laser cutting method according to the state of the art;
- Figure 2 shows a schematic top view of a first sheet metal that has been cut performing a laser cutting method according to the present invention;
- Figure 3 shows a detail of a second sheet metal that has been cut performing a laser cutting method according to the present invention;
- Figure 4 shows a detail of a third sheet metal that has been cut performing a laser cutting method according to the present invention;
- Figure 5 shows a detail of a fourth sheet metal that has been cut performing a laser cutting method according to the present invention;
- Figure 6 shows a detail of a fifth sheet metal that has been cut performing a laser cutting method according to the present invention;
- Figure 7 shows a detail of a sixth sheet metal that has been cut performing a laser cutting method according to the present invention;
- Figure 8 shows an aspect of the method according to the present invention;
- Figure 9 shows a block diagram of a method according to the present invention

## DETAILED DESCRIPTION

The present invention relates to a method of laser cutting a sheet metal 1 to obtain two or more parts 100 therefrom and to recover a portion thereof (hereinafter referred to as "residual sheet portion 2") which can be reused to obtain further parts.

The sheet metal 1 extends in a cutting plane 1a and it is delimited by a peripheral edge 1b.

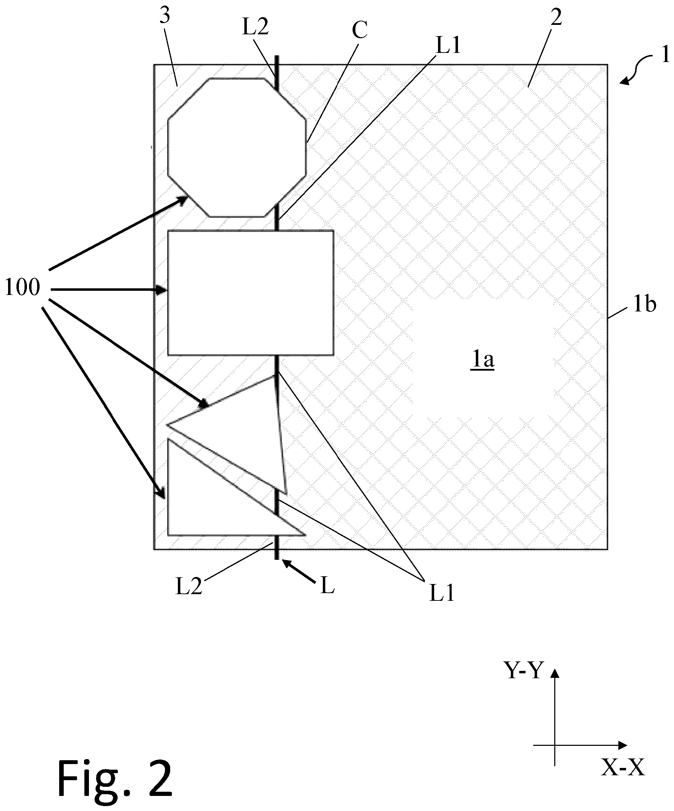

For example, in the embodiment of figure 2, the peripheral edge 1b has a quadrangular (rectangular) shape.

Preferably, the sheet metal 1 extends mainly in the cutting plane 1a and it is bounded by the peripheral edge 1b in a width direction X-X and in a length direction Y-Y (transverse to the width direction X-X). In other words, preferably, the sheet metal 1 has a predominantly two-dimensional extension and the cutting plane 1a, in which the width and length directions X-X, Y-Y lie, is a reference plane in which the sheet metal 1 mainly extends.

According to an aspect, the sheet metal 1 also extends in a thickness direction Z-Z which is transverse - preferably orthogonal - to the cutting plane 1a and, thus, also to the width and length directions X-X, Y-Y.

Preferably, the width, length and thickness directions X-X, Y-Y, Z-Z are orthogonal to each other and represent the direction along which the versors (unit vectors) of a three-dimensional Cartesian coordinate system extend.

The method according to the present invention comprises a step a) in which at least two parts 100 are cut out of the sheet metal 1.

Each part 100 is delimited by a contour 100a - i.e. one or more perimetral edges - which defines its shape. The parts 100 may or may not have the same shape depending on the case.

In detail, in step a), each part 100 is cut out of the sheet metal 1 by moving a laser beam (not shown) - generated, for example, by a cutting head of laser cutting machine - in the cutting plane 1a along a closed cutting path P which begins and ends at a lead in/out point 100b and which follows the contour 100a of the respective part 100.

The lead in/out point 100b of each closed cutting path P is the start and end point of the cutting process of the associated part 100. This means that the lead in/out point 100b of each closed cutting path P represents the point in the cutting plane 1a where the laser beam is switched on and off at the beginning and end of the cutting process of the respective part 100.

According to an embodiment, the cutting step a) comprises the sub-steps of:

a1) cutting a first part 101 by moving the laser beam along a first closed cutting path P1 which begins and ends at a first lead in/out point 101b and follows a first contour 101a of the first part 101,
a2) cutting a second part 102 by moving the laser beam along a second closed path P2 which begins and ends at a second lead in/out point 102b and follows a second contour 102b of the second part 102.

Cutting step a) can comprise further sub-steps - a3), a4) ... aN) - in which respective parts - a third part, a fourth part ... a Nth part - are cut by moving the laser beam along a respective cutting path - a third cutting path, a fourth cutting path, ... a Nth cutting path - which begins and ends at a respective lead in/out point - a third lead in/out point, a fourth lead in/out point, ... a Nth lead in/out point - and follows the contour of the respective part.

The sub-steps a1) and a2) - and, if applicable, also the further sub-steps a3), a4) ... aN) - can be carried out in succession or, if the cutting machine has multiple cutting heads or a single cutting head capable of generating several laser beams at the same time, or simultaneously.

According to an aspect, the method a) comprises an initial phase a0) in which the cutting path P associated with each part 100 (e.g. the first and second cutting paths P1, P2) is elaborated.

The cutting path P associated with each part can, for example, be elaborated by a computing unit (not shown) - which can be internal or external to the cutting machine - on the basis of a target shape of the respective part to be cut. In this case, in use, the cutting machine is configured to receive the elaborated cutting path P, or data representative thereof, and then to move the cutting head so that the laser beam travels along this cutting path P, for example by means of a CNC controller.

Referring to figure 2, the at least two parts 100 (e.g. the first and second parts 101, 102) are spaced apart in the cutting plane 1a, preferably along the width and/or length directions X-X, Y-Y. For example, the parts 100 may be organized in a column along the length direction Y-Y or in a row along the width direction X-X.

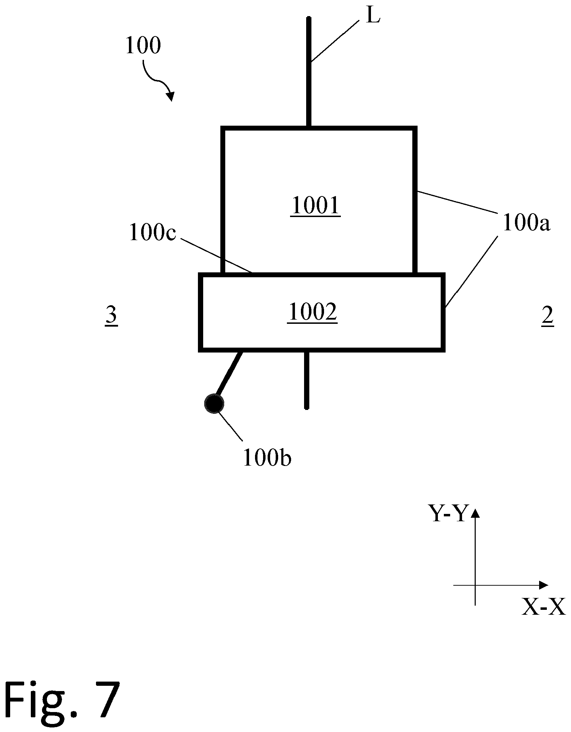

In the embodiment of figure 7, at least one of the two parts 100 is partitioned into a first part portion 1001 and a second part portion 1002, the latter being separate (distinct) from the first part portion 1001. These first and second part portions 1001, 1002 are defined by the contour 100a of the partitioned part 100 and by a partitioning segment 100c which separate them.

It should be specified that in the embodiment of figure 7, the cutting path P of each partitioned part 100 comprises the respective partitioning segment 100c.

The method according to the present invention also comprises a step b) in which, by moving the laser beam in the cutting plane 1a along a cutting line L, the sheet metal 1 is divided into a scrap sheet portion 3 containing the lead in/out points 100b and a residual sheet portion 2 from which at least one further part (not shown) can be cut out.

It should be noted that the residual sheet portion 2 is separate from the scrap sheet portion 3. This means that, after the cutting step b), the residual sheet portion 2 and the scrap sheet portion 3 can be moved independently as two separate and distinct bodies.

It should also be noted that, in the context of the present invention, the residual sheet portion 2 and the scrap sheet portion 3 are considered to be separate even if they are connected by one or more small connecting ribs or points which can be easily broken by a user, for example, by means of a hit which intensity would not have been sufficient to divide the sheet metal 1 into two separate portions before the cutting step b).

As shown in figure 2, the cutting line L is positioned in the cutting plane 1a so as to have at least one first segment L1 extending between the contours 100a of two of the at least two parts 100, and two second segments L2 - each associated with a respective part 100 - extending between the peripheral edge 1b of the sheet and the contour 100a of the respective part 100 (i.e. the one to which it is associated).

Please note that, since each first segment L1 is associated with two parts, the number of the first segments L1 is equal to the number of parts cut in step a) minus one. In formula:

$$N_{L1} = N_W - 1$$

wherein: $N_{L1}$ is the number of first segments L1, and $N_W$ is the number of parts cut in step a).

Preferably, when more than two parts 100 have been cut in step a), the two second segments L2 are associated with the extreme ones along the width direction X-X or the height direction Y-Y, i.e. the one with the two parts that are closer to the peripheral edge 1b along the width direction X-X or the height direction Y-Y.

The first and second segments L1, L2 can be cut in succession or, if the cutting machine has multiple cutting heads, or simultaneously.

If the first and second segments L1, L2 are cut in succession - i.e. one at a time - the laser beam is switched off between the cut of one of the segments L1, L2 and the cut of the following one. Therefore, in this case, the cutting step b) comprises the sub-steps of:

> b1) switching on the laser beam,
> b2) moving the laser beam in the cutting plane 1b to cut one of the segments L1, L2;
> b3) switching of the laser beam,
> b4) iterating steps b1)-b3) until all first and second segments L1, L2 of the cutting line L have been cut.

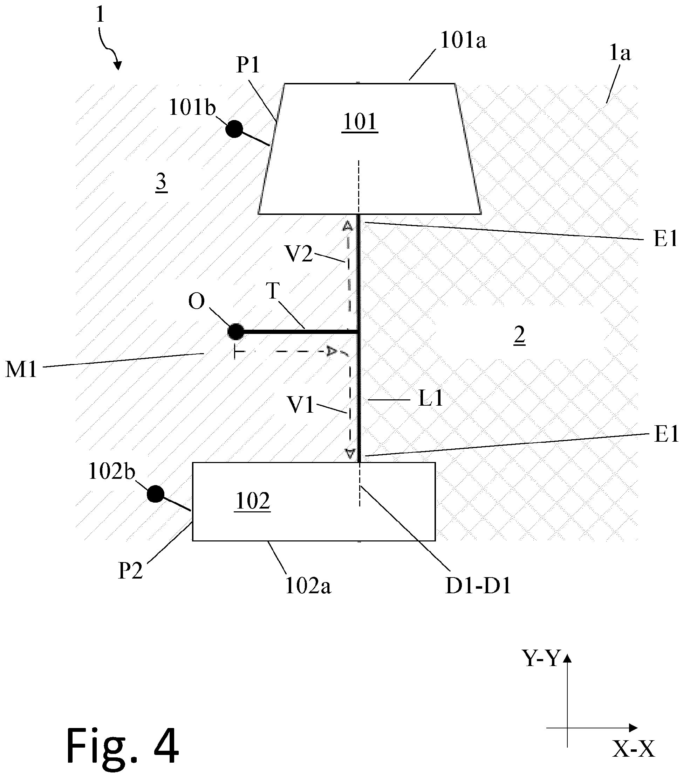

According to an aspect, the first segment L1 connects the cutting paths P associated with two of the at least two parts 100 (e.g. the first and the second cutting paths P1, P2). This means that, as shown in figure 4, the first segment L1 extends between opposite first ends E1 connected to the cutting paths P associated with a respective part 100.

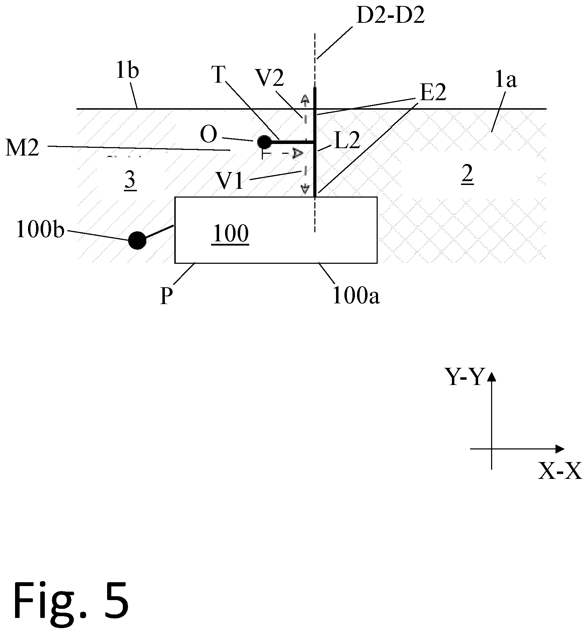

According to a further aspect, each second segment L2 connects the peripheral edge 1b of the sheet metal 1 to the cutting path P associated with the respective part 100. This means that, as shown in figure 5, each second segment L2 extends between two opposite second ends E2, one of which is connected to the cutting path P associated with a respective part 100 and the other of which is connected to the peripheral edge 1b of the sheet metal 1.

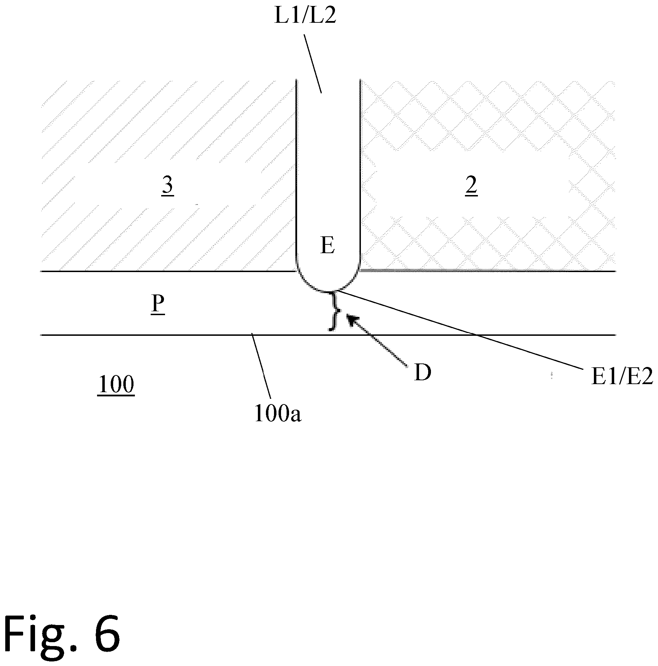

Referring to figure 6, preferably, the first and second segments L1, L2 of the cutting line L have at least one end portion EP - that, according to an aspect, comprises one of the above-mentioned first or second ends E1, E2 - which is spaced from the contour 100a of the respective part 100 by a safety distance D. This means that, preferably, the first and the second ends E1, E2 of the first and second segments L1, L2 which are in correspondence of a part 100 fall within the cutting path P associated with such part 100 but are spaced from its contour 100a by the safety distance D (i.e. do not touch/reach it). In other words, preferably, the first and the second ends E1, E2 of the first and second segments L1, L2 fall within the thickness of the cut made by the laser beam.

The safety distance D can, for example, be comprised between 0 and laser beam thickness 0.2 mm. In particular, according to an aspect, the safety distance D is less than the thickness of the cut made by the laser beam.

In the embodiment of figure 2, the first segment L1 is connected (linked/joined up) to at least one of the two second segments L2 by a connecting section C of the cutting path P associated with one of the parts 100. Please note that, if the parts 100 cut in step a) are only two, the first segment L1 is preferably connected (linked/joined up) to both second segments L2 - on opposite sides - by means of the connecting sections C of cutting paths P associated with the two parts 100.

It should be noted that, even if the first and second segments L1, L2 are connected to each other by the connecting sections C of the cutting paths P, the first and second segments L1, L2 are distinct and separate from each other. In other words, the cutting line L is discontinuous and its discontinuities (i.e. the gaps between the first and second segments L1, L2) are filled by a respective part 100, whose cutting paths P connect the segments of cutting line L (i.e. the first and second segments L1, L2).

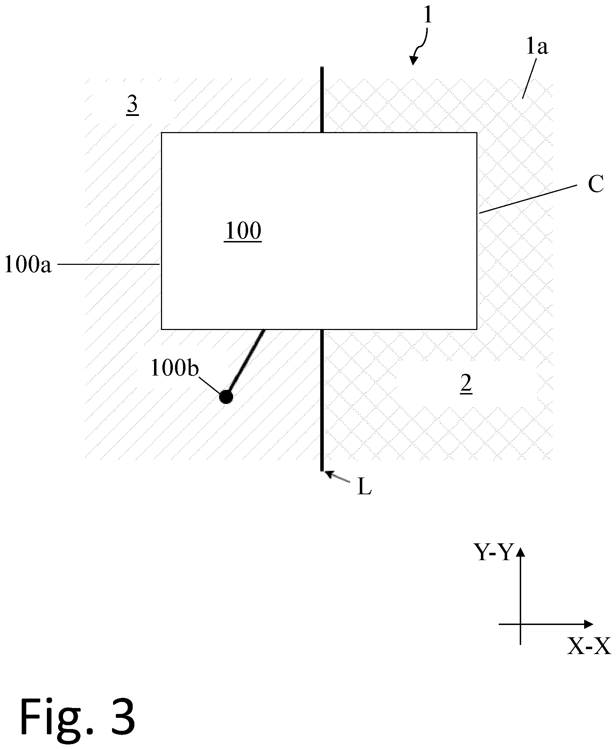

In the embodiments shown in figures 2-8, the cutting line L - and, in particular, its first and second segments L1, L2 - extends at least partially parallel to the width direction X-X and/or the height direction Y-Y.

In particular, in the embodiment shown in figure 2, the first segment L1 extends linearly along a first direction D1-D1 and the second segments L2 extend linearly along a respective second direction D2-D2.

Preferably, the first and the second directions D1-D1, D2-D2 are parallel.

More preferably, the first and the second directions D1-D1, D2-D2 are coincident. This means that the first and second segments are all aligned along a common direction passing through all the parts 100 cut in step a).

It should be noted that, in the cutting steps a) and b), the laser beam used to cut the sheet metal 1 is directed transverse to the cutting plane 1a and, preferably, it is directed parallel to the thickness direction Z-Z.

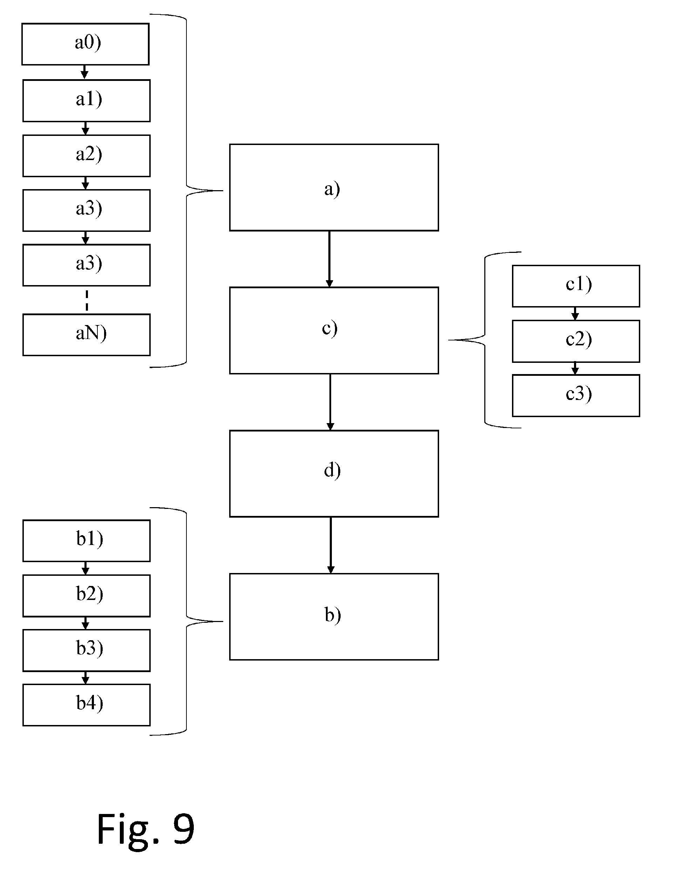

According to an aspect shown in figure 9, the method comprises a cutting line positioning step c) before the cutting step b), wherein the position of the cutting line L in the cutting plane 1a is defined.

Preferably, in the cutting line positioning step c), the position of the cutting line L is defined by minimizing the total length of the cutting line L which is given by the sum of lengths of the first and second segments L1, L2.

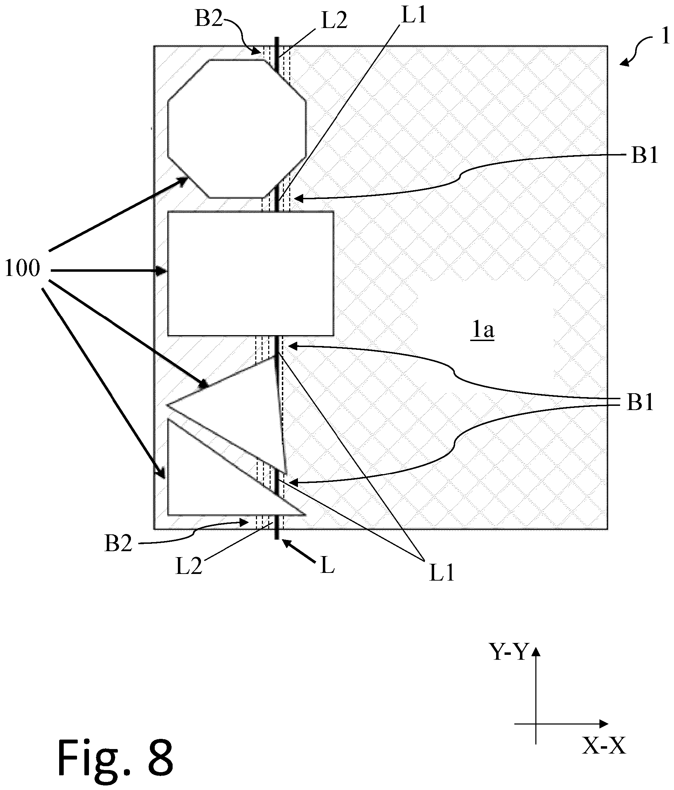

More preferably, the cutting line positioning step c) comprises a first sub-step c1) of identifying a bundle of segments B1, B2 for each first and second segment L1, L2 to be defined (see figure 8), a second sub-step c2) of computing the length of each segment of each bundle of segments B1, B2, and a third sub-step c3) of selecting the first and the second segments L1, L2 from the respective bundle of segments B1, B2 such that the total length of the cutting line L is the smallest.

In the embodiment of figure 8, the first bundle of segments B1 comprises a plurality of possible first segments L1, i.e. two or more first segments extending between the contours 100a of two parts associated with the first segment L1 to be determined. In detail, preferably, the plurality of possible first segments L1 of the first bundle of segments B 1 are all rectilinear and parallel. More preferably, the plurality of possible first segments L1 of the first bundle of segments B1 are all parallel to the first direction D1-D1 and spaced along a direction transverse to this first direction D1-D1.

Always with reference to the embodiment of figure 8, the second bundle of segments B2 comprises a plurality of possible second segments L2, i.e. two or more second segments extending between the peripheral edge 1b of the sheet metal 1 and the contour 100a of the respective part 100 (i.e. the part 100 associated with the second segment L2 to be determined). In detail, preferably, the plurality of possible second segments L2 of the second bundle B2 are all rectilinear and parallel. More preferably, the plurality of possible second segments L2 of the second bundle B2 are all parallel to the second direction D2-D2 and spaced along a direction transverse to this second direction D2-D2.

In the sub-step c3), preferably, the first and the second segments L1, L2 are selected from the respective bundle of segments B 1, B2 such that the total length of the cutting line L is the smallest of the possible cutting lines connecting the cutting paths associated with the parts to each other and to the peripheral edge 1b of the sheet metal 1. Figure 8 shows a plurality of possible cutting lines (dotted lines) and highlights the one with the minimum length, i.e. the smallest (marked continuous line).

The cutting line positioning step c) can be carried out, for example, by the above-mentioned computing unit or by a further computing unit which, receiving in input (or computing) the position of the parts on the cutting plane 1a of the sheet metal 1, is configured to determine the position of the cutting line L and, thus, the position of all its segments (i.e. first and second segments L1, L2).

Referring to figures 4 and 5, the first and second segments L1, L2 of the cutting line L are preferably made by moving the laser beam starting from a respective piercing point O. Thus, each segment L1, L2 of the cutting line L has its respective piercing point O, which is the point in the cutting plane 1a where the laser beam is switched on to start the cutting process to cut the respective segment L1, L2 of the cutting line L.

To not ruin the residual sheet portion 2 and potentially compromising its usability for future laser cutting operations, the piercing points O are preferably arranged on the scrap sheet portion 3 and outside the respective first and second segments L1, L2.

For example, the piercing point O associated with the first segment L1 can be placed in a first middle region M1 between the two respective parts 100, while those associated with the second segments L2 can be placed in second middle regions M2 between the respective part 100 and the peripheral edge 1b of the sheet metal 1.

According to one embodiment, before the cutting step b), the method according to the present disclosure can comprise a set-up step d) in which the position of the piercing points O is determined for each first and second segment.

For example, the position of the piercing points O can be determined by the above-mentioned computing unit or the further computing unit. The position of the piercing points can also be determined by the user, for example, via a control interface (not shown) of the laser cutting machine.

If the set-up step d) has been carried out, in order to cut the first and second segments L1, L2 during the cutting step b), the laser beam is moved in the cutting plane 1a starting from the respective piercing points O.

Referring to the embodiments shown in figures 4 and 5, each piercing point O is connected to the associated first or second segment L1, L2 by a respective bridging section T directed transversely to the associated first or second segment L1, L2. In these embodiments, in the cutting step b), for each first and second segment L1, L2, the laser beam is moved in the cutting plane 1a, starting from the respecting piercing point O, along the respective bridging section T and then along the respective first or second segment L1, L2.

Always referring to figure 4 and 5, after moving the laser beam along the bridging section T, in order to cut the respective first or second segment L1, L2, the laser beam is preferably moved in the cutting plane 1a at first in a first direction of movement V1 towards one of the parts 100 then in an opposite second direction of movement V2 towards the other part 100 or the peripheral edge 1b of the sheet metal 1.

Preferably, the first direction of movement V1 and the second direction of movement V2 are aligned along the first direction D1-D1 or the second direction D2-D2. In other words, the first direction of movement V1 and the second direction of movement V2 indicate opposite orientations along the first or second directions D1-D1, D2-D2.

It is also object of the present invention a computer program product comprising instructions which, when the program is executed by a computer unit of a laser cutting machine, cause the laser cutting machine to carry out the method according to any of the previous claims.

Those skilled in the art will obviously appreciate that several changes and variants may be made to the arrangements as described hereinbefore to meet incidental and specific needs. All these variants and changes fall within the scope of the invention, as defined in the following claims.

**Claims**

1. Method for laser cutting a sheet metal (1) extending in a cutting plane (1a) and delimited by a peripheral edge (1b), the method comprising the step of:

    a) cutting at least two parts (100) out of the sheet metal (1), the at least two parts (100) being delimited by a respective contour (100a) and being spaced apart in the cutting plane (1a), each part (100) being cut out of the sheet metal (1) by moving a laser beam in the cutting plane (1a) along a closed cutting path (P) which begins and ends at a lead in/out point (100b) and follows the contour (100a) of the respective part (100);
    b) cutting the sheet metal (1) by moving the laser beam in the cutting plane (1a) along a cutting line (L) to divide the sheet metal (1) into:

        - a scrap sheet portion (3) which contains the lead in/out points (100b), and
        - a residual sheet portion (2), separate from the scrap portion (3), out of which further parts can be cut,

    **characterized in that** the cutting line (L) is positioned in the cutting plane (1a) so that it has:

        - at least a first segment (L1) extending between the contours (100a) of two of the at least two parts (100), and
        - two second segments (L2), each second segment (L2) being associated to a respective part (100) and extending between the peripheral edge (1b) of the sheet metal (1) and the contour (100a) of the respective part (100).

2. Method according to claim 1, wherein:

    - the first segment (L1) connects the cutting paths (P) associated with two of the at least two parts (100),
    - each second segment (L2) connects the peripheral edge (1b) of the sheet metal (1) to the cutting path (P) associated with the respective part (100).

3. Method according to claim 1 or 2, wherein the first segment (L1) is connected to at least one of the two second segments (L2) by a connecting section (C) of the cutting path (P).

4. Method according to any of the previous claims, wherein:

    - the cutting line (L) has a total length given by the sum of the lengths of the first segment (L1) and the second segments (L2),
    - the method comprising a cutting line positioning step c) before the cutting step b), wherein the position of the cutting line (L) is defined by minimizing the total length of the cutting line (L).

5. Method according to claim 4, wherein the cutting line positioning step c) comprises the sub-steps of:

    c1) identifying a bundle of segments (B1, B2) for each first and second segments (L1, L2) to be defined,
    c2) computing the length of each segment of each bundle of segments (B1, B2),
    c3) selecting the first and the second segments (L1, L2) from the respective bundle of segments (B1, B2) such that the total length of the cutting line (L) is the smallest.

6. Method according to any of the previous claims, wherein the first segment (L1) extends linearly along a first direction (D1-D1) and the second segments (L2) extend linearly along a respective second direction (D2-D2), the first direction (D1-D1) and the second direction (D2-D2) being parallel.

7. Method according to claim 6, wherein the first direction (D1-D1) and the second direction (D2-D2) are coincident.

8. Method according to any of the previous claims, comprising a set-up step d) before the cutting step b), wherein:

    - in the set-up step d) the position of a piercing point (O) in the cutting plane (1a) is computed for each first and second segments (L1, L2), the piercing points (O) being arranged on the scrap sheet portion (3) outside of the respective first or second segments (L1, L2),
    - in the cutting step b) the laser beam is moved in the cutting plane (1a) starting from the piercing points (O) to cut the respective first or second segment (L1, L2) of the cutting line (L).

9. Method according to claim 8, wherein:

    - each piercing point (O) is connected to the associated first or second segment (L1, L2) by a respective bridging section (T) directed transversely to the associated first or second segments (L1, L2),

- in the cutting step b), for each first and second segments (L1, L2), the laser beam is moved in the cutting plane (1a) starting from the respective piercing point (O) along the respective bridging section (T) and then along the respective first or second segment (L1, L2) at first in a first direction of movement (V 1) toward one of the parts (100) then in an opposite second direction of movement (V2) toward the other part (100) or the peripheral edge (1b) of the sheet metal (1).

10. Method according to claim 8 or 9, wherein:

- the piercing point (O) associated with the first segment (L1) is in a first middle region (M1) between the respective two parts (100),
- the piercing points (O) associated with the second segments (L2) are in a second middle region (M2) between the respective part (100) and the peripheral edge (1b) of the sheet metal (1).

11. Method according to the any of previous claims, wherein the first segment (L1) and the second segments (L2) of the cutting line (L) have at least one end portion (EP) which is spaced from the contour (100a) of the respective part (100) by a safety distance (D).

12. Method according to any of the previous claims, wherein:

- at least one of the two parts (100) is partitioned in a first part portion (1001) and a second part portion (1002) separate from the first part portion (1001), the first part portion (1001) and the second part portion (1002) being defined by the contour (100a) of the respective part (100) and a partitioning segment (100c), the partitioning segment (100c) separating the first part (1001) from the second part (1002),
- the cutting path (P) of each part (100) which is partitioned into the first part portion (1001) and the second part portion (1002) comprising the partitioning segment (100c).

13. Computer program product comprising instructions which, when the program is executed by a computer unit of a laser cutting machine, cause the laser cutting machine to carry out the method according to any of the previous claims.

# Fig. 1

Fig. 2

Fig. 3

Fig. 4

D2-D2

1b    T    V2              E2    1a

M2        O              L2

3         V1

3

100b                              2

100

P              100a

Y-Y

X-X

# Fig. 5

L1/L2

3

2

E

P

E1/E2

100

D

100a

# Fig. 6

100

L

1001

100c

100a

3

1002

2

100b

Y-Y

X-X

# Fig. 7

B2   L2   L1

1

B1

100

1a

B1

B2

L2   L   L1

Y-Y

X-X

# Fig. 8

Fig. 9

**EUROPEAN SEARCH REPORT**

Application Number

EP 24 21 0138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/326172 A1 (MACH PATRICK [DE]) 3 October 2024 (2024-10-03) | 1-3, 6-11,13 | INV. B23K26/38 |
| Y | * paragraphs [0059], [0060]; figures 1,3 * | 12 | B23K26/70 |
| | ----- | | ADD. |
| X | US 7 469 620 B2 (FAGAN MATTHEW [AU]) 30 December 2008 (2008-12-30) | 1-3, 6-11,13 | B23K101/18 B23Q15/00 |
| Y | * figure 12 * | 12 | G06Q10/04 |
| | ----- | | |
| X | JP 2003 071580 A (MURATA MACHINERY LTD) 11 March 2003 (2003-03-11) | 1-3, 6-11,13 | |
| Y | * paragraphs [0015] - [0018]; figures 7, 8 * | 12 | |
| | ----- | | |
| X | JP H05 127721 A (KIWA GIKEN KK) 25 May 1993 (1993-05-25) | 1-11,13 | |
| Y | * paragraphs [0011], [0012], [0021]; figure 1 * | 12 | |
| | ----- | | |
| X | JP 4 352632 B2 (MITSUBISHI ELECTRIC CORP) 28 October 2009 (2009-10-28) | 1-3, 6-11,13 | TECHNICAL FIELDS SEARCHED (IPC) |
| Y | * paragraph [0048]; figure 7 * | 12 | B23K |
| | ----- | | G06Q |
| A | CN 116 090 667 A (JINAN BODOR LASER CO LTD) 9 May 2023 (2023-05-09) * figure 6 * | 1-13 | B23Q |
| | ----- | | |
| Y | CN 116 894 942 A (UNIV GUANGDONG TECHNOLOGY) 17 October 2023 (2023-10-17) | 12 | |
| A | * figures 6-8 * | 1-11,13 | |
| | ----- | | |
| A | CN 113 070 587 B (UNIV GUANGDONG TECHNOLOGY) 9 November 2021 (2021-11-09) * figures 2,3 * | 1-13 | |
| | ----- | | |

The present search report has been drawn up for all claims

| Place of search | Date of completion of the search | Examiner |
|---|---|---|
| Munich | 2 April 2025 | Kramer, Ellen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

EP 4 737 051 A1

## ANNEX TO THE EUROPEAN SEARCH REPORT
## ON EUROPEAN PATENT APPLICATION NO.

EP 24 21 0138

02-04-2025

| Patent document cited in search report | | | Publication date | Patent family member(s) | | | Publication date |
|---|---|---|---|---|---|---|---|
| US 2024326172 | A1 | | 03-10-2024 | CN | 116262305 | A | 16-06-2023 |
| | | | | CN | 219503945 | U | 11-08-2023 |
| | | | | DE | 102021133319 | A1 | 15-06-2023 |
| | | | | EP | 4448209 | A1 | 23-10-2024 |
| | | | | US | 2024326172 | A1 | 03-10-2024 |
| | | | | WO | 2023110440 | A1 | 22-06-2023 |
| US 7469620 | B2 | | 30-12-2008 | AT | E410258 | T1 | 15-10-2008 |
| | | | | EP | 1563940 | A1 | 17-08-2005 |
| | | | | EP | 1995013 | A2 | 26-11-2008 |
| | | | | ES | 2315606 | T3 | 01-04-2009 |
| | | | | ES | 2486294 | T3 | 18-08-2014 |
| | | | | PL | 1563940 | T3 | 29-05-2009 |
| | | | | PL | 1995013 | T3 | 30-01-2015 |
| | | | | US | 2005172764 | A1 | 11-08-2005 |
| | | | | US | 2009108792 | A1 | 30-04-2009 |
| | | | | US | 2013247730 | A1 | 26-09-2013 |
| | | | | US | 2014288691 | A1 | 25-09-2014 |
| JP 2003071580 | A | | 11-03-2003 | NONE | | | |
| JP H05127721 | A | | 25-05-1993 | JP | 3069176 | B2 | 24-07-2000 |
| | | | | JP | H05127721 | A | 25-05-1993 |
| JP 4352632 | B2 | | 28-10-2009 | JP | 4352632 | B2 | 28-10-2009 |
| | | | | JP | 2002337040 | A | 26-11-2002 |
| CN 116090667 | A | | 09-05-2023 | NONE | | | |
| CN 116894942 | A | | 17-10-2023 | NONE | | | |
| CN 113070587 | B | | 09-11-2021 | NONE | | | |

EPO FORM P0459